# EUROPÄISCHE PATENTSCHRIFT

(11) **EP 1 426 208 B1**
(45) Veröffentlichungstag und Bekanntmachung des Hinweises auf die Patenterteilung: **24.10.2007**
(21) Anmeldenummer: 03025167.2
(22) Anmeldetag: 04.11.2003
(51) Int. Cl.: B60G 17/015, B60G 21/055

(54) **Geteilter elektromechanischer Kraftfahrzeugstabilisator und Verfahren zur Wankstabilisierung bei Ausfall oder Abschaltung des aktiven Kraftfahrzeugstabilisators**
Split electro-mechanical vehicle torsion bar and method for roll-stabilisation in the event of failure or shut-down of the active stabilisation system
barre de torsion electro-mechanique divisee et methode de la stabilisation anti-roulis en cas de défaillance ou interruption du systeme anntiroulis

(30) Priorität: 07.12.2002 DE 10257211
(43) Veröffentlichungstag der Anmeldung: 09.06.2004
(73) Patentinhaber: Bayerische Motoren Werke Aktiengesellschaft, 80809 München (DE)
(72) Erfinder: Zimprich, Wolfgang, 85737 Ismaning (DE)

(56) Entgegenhaltungen:
- WO-A-00/71371
- DE-A- 19 846 275
- GB-A- 2 220 625
- US-A- 5 441 298

## Beschreibung

Geteilter elektromechanischer Kraftfahrzeugstabilisator und Verfahren zur Wankstabilisierung bei Ausfall oder Abschaltung des aktiven Kraftfahrzeugstabilisators

Die Erfindung betrifft einen geteilten elektromechanischen Kraftfahrzeugstabilisator und ein Verfahren zur Wankstabilisierung nach dem Oberbegriff des ersten Anspruchs.

Es ist bereits bekannt, einen Kraftfahrzeugstabilisator in eine erste, der Aufhängung des linken Rades einer Fahrzeug-Achse zugeordnete Stabilisatorhälfte und in eine zweite, der Aufhängung des rechten Rades dieser Fahrzeug-Achse zugeordnete Stabilisatorhälfte zu unterteilen. Sind diese Stabilisatorhälften um deren gemeinsame Längsachse gegeneinander verdrehbar, kann gegenüber Fahrwerken mit konventionellem Stabilisator eine deutlich gesteigerte Wankabstützung erreicht werden, wenn die beiden Stabilisatorhälften durch einen dazwischen angebrachten Aktuator, aufgrund einer geeigneten Ansteuerung, bedarfsgerecht gegeneinander verdreht werden.

Ein für diese Anwendung geeigneter elektromechanischer Aktuator umfasst einen Elektromotor und ein mechanisches Getriebe. Damit erhält man einen Stabilisator, dessen beide Stabilisatorhälften durch den elektromechanischen Aktuator gezielt zueinander verdreht werden können, damit ein gewünschtes Stabilisatormoment erzeugt wird, welches dann das Wanken des Fahrzeugaufbaus verhindert.

Die gattungsgemäße DE 198 46 275 A1 beschreibt einen solchen geteilten Stabilisator mit eingebautem elektrischem Schwenkmotor zur Wankregelung. Durch diesen kann über die als passive Torsionsfedern ausgebildeten Stabilisatorteile eine Vorspannung und damit ein Stabilisierungsmoment in den Fahrzeugaufbau eingeleitet werden, welches einer Wankbewegung entgegenwirkt.

Um die Stabilisatorteile zur Wankregelung vorspannen zu können, muss der Schwenkmotor aktiv ein definiertes Moment aufbringen und so einen bestimmten Verdrehwinkel zwischen den beiden Stabilisatorteilen einstellen können. Entsprechend der Größe der Wankbewegung muss die Größe des aufzubringenden Moments gewählt werden.

Bei einem Ausfall der Wankregelung, zum Beispiel durch einen Ausfall der Energieversorgung oder bedingt durch einen Fehler an einer Systemkomponente, kann der Aktuator das geforderte Moment nicht mehr aktiv aufbauen, was ohne weitere Maßnahmen dazu führt, dass die beiden Stabilisatorteile ihre Wirkung verlieren, da Rotor und Stator des Elektromotors leicht gegeneinander verdrehbar sind.

Um diese unerwünschte Verdrehung zu unterbinden, besitzt der Schwenkmotor in DE 198 46 275 A1 eine Bremse, die bei einem Fehler im System als Blockiereinrichtung zwischen den beiden Stabilisatorteilen wirkt. Die Stabilisatorteile wirken nun wie ein passiver Stabilisator, der einen Wankwinkel zulässt, der zwar vom Wankwinkel im aktiv stabilisierten Zustand abweicht, aber dennoch eine Weiterfahrt ermöglicht.

Wird allerdings bei Kurvenfahrt durch den Einsatz der Bremse von der aktiven Wankregelung in die passive Wankstabilisierung übergegangen und der Schwenkmotor blockiert, während dieser die Stabilisatorteile gegeneinander vorgespannt hat, so wird das Fahrzeug am Ende der Kurve mit einem um die Fahrzeuglängsachse verdrehten Fahrzeugaufbau weiterfahren.

Aus der US 5 441 298 A ist eine aktive Fahrwerksstabilisierung bekannt, die durch Kurzschluss der elektrischen Anschlüsse der Aktuatormotoren ein hohes Gegenmoment erzeugt.

Aufgabe der Erfindung ist es, einen geteilten Kraftfahrzeugstabilisator zur Wankstabilisierung und ein Verfahren zur Wankstabilisierung für ein Kraftfahrzeug bereitzustellen, bei dem diese Nachteile der Verwendung einer Blockiereinrichtung nicht auftreten.

Die Aufgabe wird durch die Merkmale des ersten Anspruchs beziehungsweise durch die Verfahrensschritte des dritten Anspruchs gelöst. Bevorzugte Ausgestaltungen der Erfindung beschreiben die abhängigen Ansprüche.

Nach der Erfindung ist ein zur aktiven Wankstabilisierung geteilter Kraftfahrzeugstabilisator mit einem eingebauten elektromechanischen Aktuator zum Verspannen zweier Stabilisatorteile gegeneinander, wobei der Aktuator mindestens aus einem Elektromotor und einem Getriebe besteht, dadurch gekennzeichnet, dass der Elektromotor auch als Generator betrieben werden kann, indem die Motorphasen direkt oder über einen festen oder variablen Lastwiderstand kurzgeschlossen werden.

Das hat den Vorteil, dass durch die Möglichkeit des Umschaltens des Elektromotors auf Generatorbetrieb beim Abschalten oder nach Ausfall der Wankregelung zwischen Stator und Rotor der Elektromotors ein Widerstandsmoment aufgebracht werden kann. Dieses Widerstandsmoment bedämpft die Drehbewegung der beiden Stabilisatorteile gegeneinander, ohne diese zu blockieren. Dadurch wird vorteilhafterweise sichergestellt, dass das Fahrzeug am Ende einer Kurve nicht mit einem um die Fahrzeuglängsachse verdrehten Fahrzeugaufbau weiterfahren muss, wenn in der Kurve die Wankregelung ausfällt. Denn der Fahrzeugaufbau kann sich, durch das Widerstandsmoment gedämpft, durch die Vorspannung der Aufbaufedern wieder in die Waagrechte begeben. Außerdem ermöglicht das Widerstandsmoment eine eingeschränkte passive Stabilisatorfunktion.

Über die Größe des Lastwiderstands ist die Dämpfung mittels des Widerstandsmoments vorteilhafterweise in einem weiten Bereich beliebig einstellbar.

Bei einer bevorzugten Ausführung der Erfindung ist der Elektromotor ein bürstenloser Gleichstrommotor, dessen Kurzschluss zum Betrieb als Generator über dessen Endstufentransistoren geschaltet wird.

Das hat den Vorteil, dass ein besonders einfacher Aufbau gewährleistet ist.

Ein besonders vorteilhaftes Verfahren zur Wankregelung an einer Vorderund/oder Hinterachse eines Kraftfahrzeugs, bei dem der Elektromotor Wankbewegungen des Fahrzeugaufbaus gegenüber dem Fahrwerk durch Verspannen der beiden Stabilisatorteile gegeneinander in beide Drehrichtungen des Elektromotors so ausgleicht, dass der Fahrzeugaufbau möglichst parallel einer Horizontalebene gehalten wird, ist dadurch gekennzeichnet, dass nach einem Abschalten oder bei einem Ausfall des Elektromotors, Wankbewegungen des Fahrzeugaufbaus gegenüber dem Fahrwerk dadurch gedämpft werden, dass der Elektromotor als Generator betrieben wird.

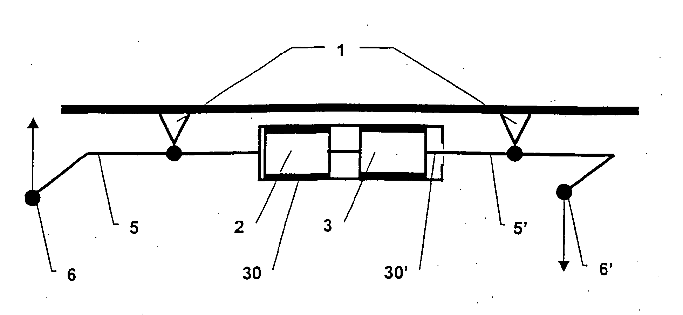

Ein bevorzugtes Ausführungsbeispiel der Erfindung ist in der nachfolgenden Beschreibung und der zugehörigen Zeichnung näher dargestellt. Die einzige Figur zeigt in schematischer Darstellung einen aktiven Kraftfahrzeugstabilisator mit einem erfindungsgemäßen Aktuator

Die Figur zeigt einen aktiven Stabilisator aus zwei Stabilisatorteilen 5, 5', gegeneinander vorspannbar durch einen elektromechanischen Aktuator. Dieser umfasst einen in Generatorbetrieb umschaltbaren Elektromotor 2 als Einrichtung zur Drehmomenterzeugung und ein mechanisches Getriebe 3 als Einrichtung zur Drehmomentabgabe an die Stabilisatorteile 5, 5'. Der Aktuator besitzt ein Gehäuse aus zwei gegeneinander verdrehbaren Gehäuseteilen 30, 30', von denen jeweils eines mit jeweils einem Stabilisatorteil 5, 5' verbunden ist. Der Stator des Elektromotors 2 ist im Gehäuseteil 30 befestigt und überträgt bei Betrieb des Elektromotors 2 ein Drehmoment über das mechanische Getriebe 3 und das Gehäuseteil 30' an das Stabilisatorteil 5', wodurch sich die beiden Stabilisatorteile 5, 5' gegeneinander verspannen.

Am Kraftfahrzeug sind Befestigungselemente nach dem Stand der Technik vorgesehen, für jedes Stabilisatorteil 5, 5' jeweils ein Traglager 1 und an den Stabilisatorteilenden 6, 6' eine Kraftübertragungseinrichtung zur nicht gezeichneten Radaufhängung.

Die Dynamik des Gesamtsystems wird dabei maßgeblich durch die Getriebeübersetzung, die Massenträgheit des Systems und die Torsionssteifigkeit der beiden Stabilisatorhälften 5, 5' beeinflusst.

Nach der Erfindung kann nun der Elektromotor 2 zur Wankregelung die beiden Stabilisatorteile 5, 5' gegeneinander verspannen. Es findet ein dem Stand der Technik zugehöriger, regelbarer und umschaltbarer Elektromotor 2 Verwendung, damit die Stabilisatorteile 5, 5' mit unterschiedlichem Drehmoment beider Drehrichtungen gegeneinander verspannt werden können. Ein Umschalten des Elektromotors 2 auf Generatorbetrieb ist ebenfalls mit konventionellen Mitteln des Standes der Technik möglich. So können zum Beispiel für den Betrieb des Elektromotors 2 als Generator, die Motorphasen direkt oder über einen festen oder variablen Lastwiderstand kurzgeschlossen werden. Beim Einsatz eines bürstenlosen Gleichstrommotors, wird dessen Kurzschluss zum Betrieb als Generator über dessen Endstufentransistoren geschaltet.

Das Umschalten auf Generatorbetrieb erfolgt immer nach einem Abschalten oder bei einem Ausfall der Wankregelung. Dann werden Wankbewegungen des Fahrzeugaufbaus gegenüber dem Fahrwerk dadurch gedämpft, dass der Elektromotor 2 als Generator betrieben wird. Diese Dämpfung lässt eine langsame Bewegung des Aktuators zu, so kann sich der Fahrzeugaufbau, zum Beispiel nach einem Ausfall der Wankregelung bei Kurvenfahrt, wieder hinreichend schnell gerade ausrichten, sobald das Fahrzeug wieder geradeaus fährt.

Wird dazu noch die Übersetzung des Kurvengetriebes 3 entsprechend gewählt, zum Beispiel nicht konstant, kann trotz Ausfall oder nach Abschalten der Wankregelung bei Kurvenfahrt noch eine Wankstabilisierung erreicht werden.

## Patentansprüche

1. Geteilter Kraftfahrzeugstabilisator zur aktiven Wankstabilisierung, mit einem elektromechanischen Aktuator zum Verspannen zweier Stabilisatorteile (5, 5') gegeneinander, der mindestens aus einem Elektromotor (2) und einem Getriebe (3) besteht, **dadurch gekennzeichnet, dass** der Elektromotor (2) auch als Generator betrieben werden kann, indem die Motorphasen direkt oder über einen festen oder variablen Lastwiderstand kurzgeschlossen werden.

2. Kraftfahrzeugstabilisator nach Anspruch 1, **dadurch gekennzeichnet, dass** der Elektromotor (2) ein bürstenloser Gleichstrommotor ist, dessen Kurzschluss zum Betrieb als Generator über dessen Endstufentransistoren geschaltet wird.

3. Verfahren zur Wankregelung an einer Vorder- und/oder Hinterachse eines Kraftfahrzeugs mit einem geteilten Stabilisator, nach einem der Ansprüche 1 oder 2, bei dem der Elektromotor (2) Wankbewegungen des Fahrzeugaufbaus gegenüber dem Fahrwerk durch Verspannen der beiden Stabilisatorteile (5, 5') gegeneinander in beide Drehrichtungen des Elektromotors (2) so ausgleicht, dass der Fahrzeugaufbau möglichst parallel einer Horizontalebene gehalten wird, **dadurch gekennzeichnet, dass** nach einem Abschalten oder bei einem Ausfall des Elektromotors (2), Wankbewegungen des Fahrzeugaufbaus gegenüber dem Fahrwerk dadurch gedämpft werden, dass der Elektromotor (2) als Generator betrieben wird.

## Claims

1. A divided vehicle stabiliser for active roll stabilisation, comprising an electromechanical actuator for bracing two stabiliser parts (5, 5') against one another and comprising at least one electric motor (2) and one gear unit (3), **characterised in that** the electric motor (2) can also be operated as a generator by short-circuiting the motor phases directly or via a fixed or variable load resistor.

2. A vehicle stabiliser according to claim 1, **characterised in that** the electric motor (2) is a brushless d.c. motor comprising end stage transistors for short-circuiting the motor for operation as a generator.

3. A method of controlling the roll on a front and/or rear axle of a motor vehicle by using a divided stabiliser according to claim 1 or 2, wherein the electric motor (2) balances rolling of the body relative to the running gear by bracing the two stabiliser parts (5, 5') against one another in both directions of rotation of the electric motor (2) so that the body is held substantially parallel to a horizontal plane, **characterised in that** after switching off or if the motor (2) fails, rolling of the body relative to the running gear is damped by operating the motor (2) as a generator.

## Revendications

1. Barre de torsion antiroulis divisée, pour la stabilisation antiroulis, comportant un actionneur électromécanique pour bloquer deux parties de barre 5, 5' l'une par rapport à l'autre, l'actionneur ayant au moins un moteur électrique 2 et une transmission 3,
**caractérisée en ce que**
le moteur électrique 2 peut également fonctionner comme générateur **en ce que** les phases du moteur sont court-circuitées directement ou par l'intermédiaire d'une résistance de charge fixe ou variable.

2. Barre antiroulis de véhicule automobile selon la revendication 1,
**caractérisée en ce que**
le moteur électrique 2 est un moteur à courant continu sans collecteur dont le court-circuit pour fonctionner comme générateur est commuté par ses transistors de l'étage de puissance.

3. Procédé de régulation antiroulis d'un essieu avant et/ou d'un essieu arrière de véhicule automobile à l'aide d'une barre antiroulis divisée selon l'une des revendications 1 ou 2, dont le moteur électrique 2 compense les mouvements de roulis de la carrosserie du véhicule par rapport au châssis en bloquant les deux parties de barre antiroulis 5, 5' l'une par rapport à l'autre dans les deux sens de rotation du moteur électrique 2, pour maintenir la carrosserie du véhicule aussi parallèlement que possible par rapport au plan horizontal,
**caractérisé en ce qu'**
après coupure ou en cas de défaillance du moteur électrique 2, on amortit les mouvements de roulis de la carrosserie du véhicule par rapport au châssis en faisant fonctionner le moteur électrique 2 comme générateur.
